Europäisches Patentamt

European Patent Office

Office européen des brevets

(11) Publication number: 0 353 992
A2

# EUROPEAN PATENT APPLICATION

(21) Application number: 89307805.5

(22) Date of filing: 01.08.89

(51) Int. Cl.5: C 09 K 5/06

(30) Priority: 05.08.88 JP 195359/88

(43) Date of publication of application:
07.02.90 Bulletin 90/06

(84) Designated Contracting States: DE FR GB

(71) Applicant: HITACHI, LTD.
6, Kanda Surugadai 4-chome Chiyoda-ku
Tokyo (JP)

(72) Inventor: Koseki, Yasuo
3712, Kanai-cho
Hitachioh!a-shi Ibaraki-ken (JP)

Yamada, Akira
4-29-8, Nishinarusawa-cho
Hitachi-shi Ibaraki-ken (JP)

Kurokawa, Hideaki
1317-11, Ishinazaka-cho
Hitachi-shi Ibaraki-ken (JP)

Ookouchi, Isao
3-3-10 Kashima-cho
Hitachi-shi Ibaraki-ken (JP)

Ebara, Katsuya
1339-2, Motoyoshida-cho
Mito-shi Ibaraki-ken (JP)

Takahashi, Sankichi
2-26-17, Moriyama-cho
Hitashi-shi Ibaraki-ken (JP)

(74) Representative: Paget, Hugh Charles Edward et al
MEWBURN ELLIS & CO. 2/3 Cursitor Street
London EC4A 1BQ (GB)

(54) Methods of heat transfer and apparatus therefor.

(57) Apparatus and method for carrying out heat transfer, and
storage are provided. In a conduit system, there is a heat
storage system (4,5) consisting of a mixture of a liquid first
material (preferably oleophilic) and a second material (prefer-
ably non-oleophilic) not soluble in said first material and having
a higher melting point than said first material. The heat storage
system is capable of conversion to and fro between two states
of which a first state is an emulsion in which said first material
forms the continuous phase and said second material in the
liquid state forms the internal phase and a second state is a
slurry type state in which said second material is in the frozen
state in the form of particles in said first material. A tank (1)
stores the heat storage system. At a first location (2) of the
conduit system, heat is removed from the heat storage system
by converting it from said first state to said second state. At a
second location (3) remote from said first location, heat is put
into the storage system by converting it from said second state
to said first state.

EP 0 353 992 A2

Description

## METHODS OF HEAT TRANSFER AND APPARATUS THEREFOR

The present invention relates to methods and apparatus for carrying out heat transfer processes, such as heat exchange, heat storage and heat transport using the latent heat accompanying phase change of a substance. The invention is particularly but not exclusively applicable to the cooling of buildings and to the cooling of computers and other electronic devices where local high energy outputs arise.

As conventional heat storage methods, heat storage of "hot heat" is known where there is a fluctuating source of heat such as solar heat and when use is made of a hot water boiler utilizing night-time or off-peak electric power, and storage of "cold heat" or ice heat is known using a compression heat pump. In this specification, the term "heat storage" is used to refer both to storage of a hot medium available for heating and of a cold medium available for cooling. The former may be called "hot heat" and the latter "cold heat". As ice heat storage uses a phase change, the heat storage density is large compared with cool water heat storage. However, cooling pipes become coated with ice and heat exchange performance is reduced. There are therefore the defects that the performance coefficient of the compression heat pump is reduced and electric power consumption is increased.

On the other hand, the demands of district central heating systems and air-conditioning systems have been increased recently, and improved efficiency of heat storage and heat transport are sought. To realize high efficiency, various proposals have been made.

The Japanese magazine Reito ('Refrigeration') (vol. 50, No. 572, 1975, 6, pages 3-8) describes a process of heat transfer in which at a main plant gas-hydrate crystals are formed under pressure in cold water, and the water is transferred to a sub-plant at which the gas-hydrate is decomposed. The water, cooled by the removal of the heat of hydration of the gas, is then distributed to users. This is a form of chemical storage of cold heat and involves pressurization and gas-handling difficulties.

JP-A-165593/1986 describes a heat storage apparatus having a heat exchanger in a circuit with a storage vessel. A mixture of water and decanol is passed round the circuit. When cooled at the heat exchanger, the decanol forms a slurry of solid particles in the water, and when heated at the heat exchanger it forms an oil-in-water emulsion. Decanol has a lower specific heat and latent heat of freezing than water, so that the efficiency of this system is not high. Furthermore the apparatus has the defect that heat exchange for cooling and heating of the decanol/water system takes place at the same location. Consequently, only one such process can take place at one time.

The object of the present invention is to provide methods and apparatus of heat transfer, e.g. exchange, heat storage and heat transport, which are capable of high density heat storage and heat transport, using a phase change.

In a first aspect, the invention lies in a method of transfer of heat comprising the steps of:

(a) providing a heat storage system consisting of a mixture of an oleophilic liquid and a non-oleophilic material not soluble in said oleophilic liquid and having a higher melting point than said oleophilic liquid, said system being capable of conversion to and fro between two states of which a first state is a water-in-oil type emulsion in which said oleophilic liquid is the continuous phase and said non-oleophilic material in the liquid state is the internal phase and a second state is a slurry type state in which said non-oleophilic material is in the frozen state in the form of particles in said oleophilic liquid, and

(b) effecting heat transfer by at least one of

(i) removing heat from said heat storage system so as to convert it from said first state to said second state

(ii) putting heat into said heat storage system so as to convert it from said second second state to said first state.

In this aspect the invention thus particularly requires use of a water-in-oil type emulsion. Preferably the amount of non-oleophilic material is less than 50% by weight of the mixture, which ensures good transport properties of the system. Preferably the non-oleophilic material has a higher specific heat in the liquid phase than said oleophilic liquid.

It is desirable that in the slurry state separation does not tend to occur. Therefore, preferably, the ratio of the density of the non-oleophilic material in the solid phase at its melting point to the density of the oleophilic material at the same temperature is in the range 0.95 to 1.2, more preferably 1 to 1.1.

The non-oleophilic material may be an aqueous material having a melting point in the region of 0°C, or for transfer of hot heat, the non-oleophilic material may be a hydrated inorganic compound of melting point in the range 20 to 120°C.

In another aspect, the invention is not limited to use of water-in-oil type emulsions. In this aspect, the method of transfer of heat comprises the steps of

(a) providing a heat storage system consisting of a mixture of a liquid first material and a second material not soluble in said first material and having a higher melting point than said first material, said system being capable of conversion to and fro between two states of which a first state is an emulsion in which said first material forms the continuous phase and said second material in the liquid state forms the internal phase and a second state is a slurry type state in which said second material is in the frozen state in the form of particles in said first material,

(b) at a first location removing heat from said heat storage system by converting it from said first state to said second state,

(c) at a second location remote from said first location putting heat into said storage system by converting it from said second state to said first state before, during or after step (b), and

(d) moving at least part of said heat storage system between said first and second locations.

This method may include the step of storing said heat storage system in bulk in a storage vessel between said steps (b) and (c).

At least one of said steps (b) and (c) is preferably performed at a constant temperature which is the melting point of said second material, so as to maintain a constant temperature at at least one of said locations.

In another aspect, when either a water-in-oil type emulsion is used or an oil-in-water type, said first and second materials of the heat storage system are selected so that substantially no separation of the materials takes place in said second state.

It is an advantage of using a water-in-oil type emulsion in the invention that corrosion of piping by water is reduced. Thus the invention may include the step of transferring the heat storage system through a piping system which is contacted at least mainly by the oleophilic liquid whereby corrosion of said piping system due to contact with said non-oleophilic material is minimized.

An important optional feature of the method is that control can be effected by observation of the volume of the heat storage system, said volume changing by a substantial amount on conversion between said first and second states.

The invention furthermore provides apparatus for carrying out the above methods. In one aspect, there is provided apparatus for carrying out heat transfer, comprising

(a) a conduit system

(b) in said conduit system, a heat storage system consisting of a mixture of a liquid first material and a second material not soluble in said first material and having a higher melting point than said first material, said system being capable of conversion to and fro between two states of which a first state is an emulsion in which said first material forms the continuous phase and said second material in the liquid state forms the internal phase and a second state is a slurry type state in which said second material is in the frozen state in the form of particles in said first material,

(c) at a first location of said conduit system, output means for removing heat from said heat storage system by converting it from said first state to said second state,

(d) at a second location of said conduit system remote from said first location, input means for putting heat into said storage system by converting it from said second state to said first state,

(e) means for moving at least part of said heat storage system to and fro between said input and output means.

The apparatus preferably includes storage means for storing said heat storage system in bulk, connected to said conduit system. The storage means may comprise a vessel defining a volume for storage of said heat storage system, said volume having a first end and a second end, said conduit system including a first loop connecting said first end of said volume to said second end thereof via said input means and a second loop connecting said second end of said volume to said first end thereof via said output means, and said heat storage system having a boundary between said first and second states thereof in said volume.

The storage means preferably defines an elongate path of zig-zag or convoluted shape for travel of said heat storage system.

One application of the invention is to convert a liquefied gas to the gas state, at the same time cooling the heat storage medium.

The invention is also advantageously applied to a cooling system for a building in which the volume of heat storage medium can be kept small and to the cooling of semiconductor modules or other compact high energy devices, such as lasers.

Embodiments of the invention will now be described by way of non-limitative example with reference to the accompanying draiwngs, in which:

Fig. 1 is a system diagram illustrating a first embodiment of heat transfer apparatus according to the present invention;

Fig. 2 is a system diagram illustrating a second embodiment of heat transfer apparatus according to the present invention;

Fig. 3 is a system diagram illustrating a third apparatus according to the present invention for cooling a building;

Fig. 4 is a system diagram of a fourth apparatus according to the present invention for recovering cool heat from liquefied natural gas;

Fig. 5 is a system diagram illustrating a fifth apparatus according to the present invention for cooling a computer;

Fig. 6 is a system diagram illustrating a sixth embodiment of apparatus according to the present invention for a building;

Fig. 7 is a system diagram of a seventh apparatus according to the present invention;

Fig. 8 is a system diagram illustrating an eighth embodiment according to the present invention for heat storage.

As explained above, the invention in certain aspects is not limited to the use of a water-in-oil type emulsion. However, for convenience the following description is mainly directed to heat storage systems of the water-in-oil emulsion type.

To make such a heat storage system, an oleophilic medium is mixed with a non-oleophilic medium which is substantially immiscible, i.e. substantially not soluble, in the oleophilic medium and has a higher solidifying (melting/freezing) temperature. When this mixture is emulsified, the non-oleophilic medium forms the internal or dispersed phase of the emulsion (which is therefore a "water-in-oil" type emulsion) and this phase is solidified when the emulsion is cooled. The liquid droplets of non-oleophilic medium in the emulsion take the form of minute balls, and as the solidified particle is also in the shape of a ball, the fluidity of the slurry formed by solidification is good. In addition, as there is a phase change from the liquid droplet to the solid particle or from the solid particle to the liquid droplet, there is a large heat capacity stored, due to the latent heat of the phase change. The larger the concentration of the droplets of oleophobic liquid medium, the larger the heat quantity stored, because the heat storing and releasing is performed by the phase transition of the droplets. Since the droplets of the oleophobic liquid medium are fine and have almost uniform size, the solidified particles are also fine and of uniform size.

Therefore, the flowability of the slurry is maintained even when the concentration of the solid particles is increased, thus providing a high concentration, high storage density system. Moreover, it is possible to adjust the quantitative ratio of the media which form the emulsion.

The system forms a slurry state when the non-oleophilic medium is solidified. This state consists of solid particles dispersed through the liquid. The slurry state may range from viscous (e.g. paste-like) to very fluid.

When this heating medium is transported in the slurry state, heat is transported mainly in the form of the heat of solidification of the liquid droplets. When the transported heating medium in a slurry state absorbs heat from outside in an endothermic process, the non-oleophilic medium which has been solidified into particles melts to form liquid droplets, and the system reverts to an emulsion again.

The heat storage system repeats the above cycles and thus carries out heat transfer. For example, the heat absorbed as heat generated by the melting of the solidified particles in the endothermic process is transported in the form of the liquid droplets, and it is given up in an exothermic process which solidifies the liquid-droplets.

In addition, the non-oleophilic medium can be selected so that its volume changes when the liquid droplets in the emulsion are solidified. Then, the liquid level of the heat storage system is determined by what percentage of the liquid droplets is solidified. Conversely, if the liquid level of the heat storage system is detected, a judgement can be made as to what percentage of the liquid droplets is solidified. The percentage of solidification of the liquid droplets is thus the heat storage percentage of the system, and the percentage of heat storage is judged by measuring the liquid level. It is easily judged whether or not solidification may be further continued or stopped.

For example, when the droplets are water, the volume of the frozen droplets (ice) increases by about 10% to increase the volume of the slurry. Therefore, the freezing state of the water droplets is detected by volume change.

In the following description of specific embodiments the oleophilic medium is referred to as the O phase and the non-oleophilic medium as the W phase. The mixture of these two phases is referred to as a mixed heating medium. It is possible to store and transport hot heat or cool heat by choosing the solidifying temperature of the liquid forming the W phase.

The O phase is an oleophilic medium. Various organic oils available on the market (e.g. KSK-OIL 260 and NEO SK-OIL 170, available in Japan from Soken Kagaku, Ltd.) can be used, and oil with a high boiling point which is stable at a high temperature is suitable for heat storage and heat transport of hot heat, and oil with low solidifying temperature is suitable for heat storage and heat transport of cool heat. For hot heat, suitable oils include those having diphenyl, diphenyloxide and so forth as main components. For cool heat, naphthalene type oils are suitable such as those having monoisopropylnaphthalene, diisopropylnaphthalene, triisopropylnaphthalene, dimethylnaphthalene as main components. Other suitable oils are dibenzenetoluene, ethyldiphenyl, diarylalkane, paracymene and heavy alkynebenzene. This range of oils provides a wide variety of specific gravities.

For the W phase, various organic and inorganic latent heat storage solutions can be used, chosen according to the heat storage and heat transport temperature. For example, as oleophobic materials, hydrated inorganic compounds such as $CaCl_2\text{-}6H_2O$ (about 30°C), $Na_2SO_4\text{-}10H_2O$ (about 32°C), $NaHPO_4\text{-}12H_2O$ (about 35°C), $Na_2S_2O_3\text{-}5H_2O$ (about 48°C), $NaCH_3COO\text{-}3H_2O$ (about 58°C), $Ba(OH)\text{-}8H_2O$ (about 78°C), $Mg(NO_3)_2\text{-}6H_2O$ (about 89°C) and $MgCl_2\text{-}6H_2O$ (about 116°C) may be used for hot heat such as is provided by solar heat. Agents for preventing supercooling should be included, if necessary. The numerals in brackets are the melting temperatures of these oleophobic materials. On the other hand, water which has a large solidification latent heat (heat storage and heat transport density is large) is mainly used for cool heat. A water solution in which an inorganic material is added to change the solidifying temperature is suitable.

It is preferable to use an oleophilic emulsifier to form a stable W/O emulsion in the present invention. A nonionic emulsifier such as polyalcohol-fatty-acid-partial-ester (fatty-acid-monoglyceride, sorbitan-fatty-acid-monoester, etc.) and polyoxalkylene (polyoxypropylenealkylether, polyoxyethylenesorbitan-fatty-acid-ester, etc.) is suitable.

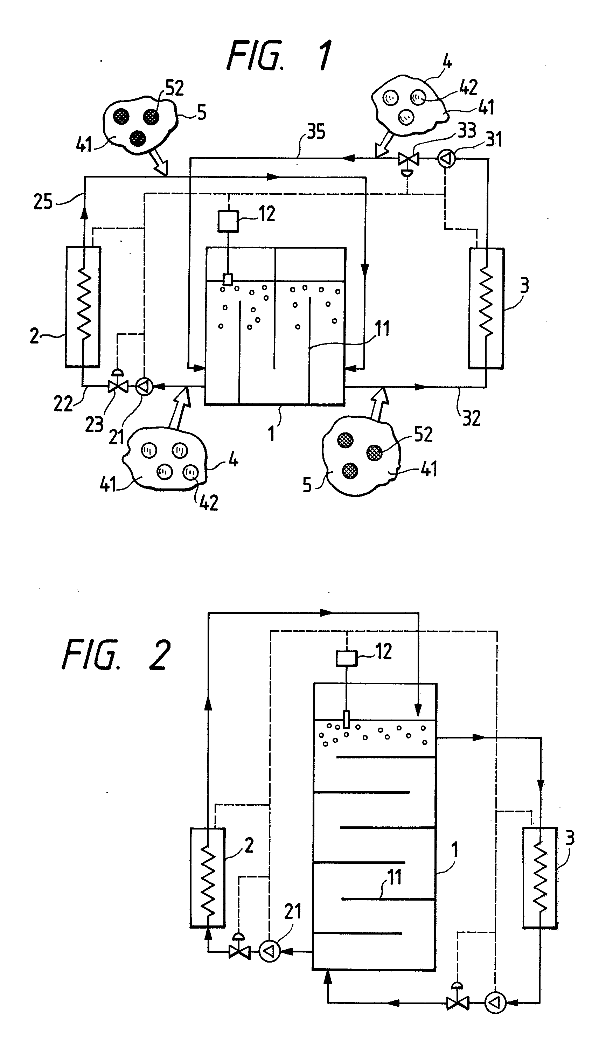

Fig. 1 shows a heat conversion and heat transport apparatus provided with a storage tank, a heat release circuit and an endothermic circuit as its main components.

In the storage tank 1, an emulsion storage and slurry storage take place in the same container. Baffle plates 11 are provided vertically and alternatingly in the tank 1, and the tank forms a zig-zag passage.

The heat-release circuit is provided with a cooler 2 which removes heat from the emulsion and changes it into the slurry state. An emulsion outlet pipe 22 connects the inlet of the cooler 2 to one end of the zig-zag passage in the storing tank 1. A slurry return pipe 25 connects the outlet of the cooler 2 to the other end of the zig-zag passage. A cooling pump 21 is inserted in the emulsion outlet pipe 22 for pumping the emulsion from storage tank 1 to the cooler 2.

The endothermic circuit is provided with a heater 3 which heats the slurry and changes it into the emulsion. A slurry outlet pipe 32 connects the inlet of the heater 3 to the same end of the zig-zag passage in the tank 1 as the slurry return pipe 25. An emulsion return pipe 35 connects the outlet of the heater 3 to the other end of the zig-zag passage. A heating pump 31 is inserted in the emulsion return pipe 35 to send the emulsion produced in the heater 3 to storage tank 1.

In the storage tank 1, the mixed heat storage system (an oleophilic heating medium as the O phase and a non-oleophilic heating medium as the W phase mixed together) is stored in a W/O emulsion state and in a slurry state in which the W phase is solidified.

First, the operation of this apparatus is described for the case of cool heat storage and heat transport. Water is used as the W phase, paracymene as the O phase and sorbitanmonooleate as an emulsifier. The W/O emulsion 4 in which minute liquid droplets 42 are dispersed in the continuous O phase is stored in the storing tank 1.

Cool heat storage is carried out by sending the W/O emulsion 4 from the storage tank 1 to the cooler 2 where it is cooled, the minute liquid-drops solidifying to form a slurry 5 in which minute solid particles 52 are dispersed in the liquid O phase 41 and returning it to the other end of the tank 1. The returned slurry 5 is moved from one end of the zig-zag passage in the tank 1 to the other by piston flow, and the medium in the tank thus changes from the W/O emulsion into the slurry. There is a boundary in the tank between the emulsion and the slurry. The flow of the heat storage system forms a closed cycle and there is no outflow to outside the system, but when the liquid droplets are solidified, the volume is changed since the specific gravity is changed, and the liquid level of the mixed heating medium in the storage tank 1 is changed. Accordingly, the progress of heat storage represented by the conversion rate from the emulsion to the slurry can be monitored by a liquid-level meter 12 installed at the tank 1. When the W phase is water, the volume is increased when the liquid become solid particles, and the liquid level is raised as the cold heat storage progresses. When it is detected that the prescribed liquid level is attained, heat storage is completed. Heat storage is started and stopped on the basis of control by (1) starting and stopping the cooler 2, (2) starting and stopping the cooling pump 21, (3) opening and closing a valve 23 by a signal from the liquid-level meter 12.

For the heat transport and endothermic operation, the slurry 5 is transported from one end of the storage tank 1 to the heater 3 through the slurry outlet pipe 32, and the solid particles 52 in the slurry 5 absorb heat from around the heater 3 and are liquefied into minute liquid drops and returned to the other end of the storage tank 1 by the heat pump 31 in the form of the W/O emulsion 4. The progress of the heat transport and endothermic operation is monitored by the liquid-level meter 12 as heat storage and is controlled by the heat pump 21, a valve 33 and the heater 3.

For hot heat storage and heat transport, $CaCl_2$-$6H_2O$ for example is selected as the W phase and the W/O emulsion is formed in a heated state. In this heat storage system, the W phase is solidified at room temperature to form the slurry 5. The operation is the opposite to that for cool heat storage and heat transport. Heat is stored using the heater 3, transported by the emulsion outlet pipe 22 and released at the cooler 2 to generate hot heat to be used for heating etc. Thus, for heat storage, the slurry 5 in the tank is sent from one end of the tank to the heater 3 to absorb heat, the particles in the slurry are melted to form liquid drops to form the W/O emulsion, and this is returned to the other end of the storage tank 1 by the heat pump 31. In the zig-zag passage formed by the baffle plates 11 in the tank 1, the slurry 5 is replaced by the W/O emulsion 4 from the side into which the emulsion flows by piston flow in the passage. The progress of hot heat storage is, as in the case of cool heat storage, monitored by detecting the change in liquid level using liquid-level meter 12, and stopping and starting the heater 3 and the heat pump 31, and opening and closing the valve 33 controlled by a signal output from the liquid-level meter 12.

For hot heat release, the W/O emulsion 4 is sent to the cooler 2 by the cooling pump 21 from the end of the passage in the tank 1 to which the W/O emulsion is sent from the heater 3. The W/O emulsion 4 releases heat in the coller 2, its temperature drops and the liquid droplets 42 are solidified to form the slurry 5 which returns to the other end of the passage in the tank 1. The cooler 2 is, conversely, heated by the W/O emulsion and its hot heat is used for heating and so forth.

In this embodiment, the pumps 21 and 31 for moving the heat storage system are not in the pipes where the slurry passes, but in the pipes where the W/O emulsion passes. This prevents contact of the slurry with the pump and erosion of the pump by the slurry, as well as allowing mixing of the W/O emulsion by the stirring effect of the pump.

In Figs. 2 to 8, parts corresponding to parts of the apparatus of Fig. 1 are given the same reference numerals.

In the second embodiment shown in Fig. 2, the storage tank 1 stands vertically to reduce its flow area. The control of heat storage and release using the liquid-level meter 12, and the position of the pumps is the same as in Fig. 1. The baffle plates in the storage tank 1 are arranged horizontally, and the flow of the heat storage medium in the zig-zag path is generally vertical in the tank 1. In Fig. 2, the suction pipe of the cooling pump 21 and the discharge pipe of the heating pump 31 are both connected to the bottom of the storage tank 1. However, if the difference in specific gravity between the liquid of the slurry and the solidified particles is large, it is necessary to arrange this connection taking into consideration the settling or rise of the particles.

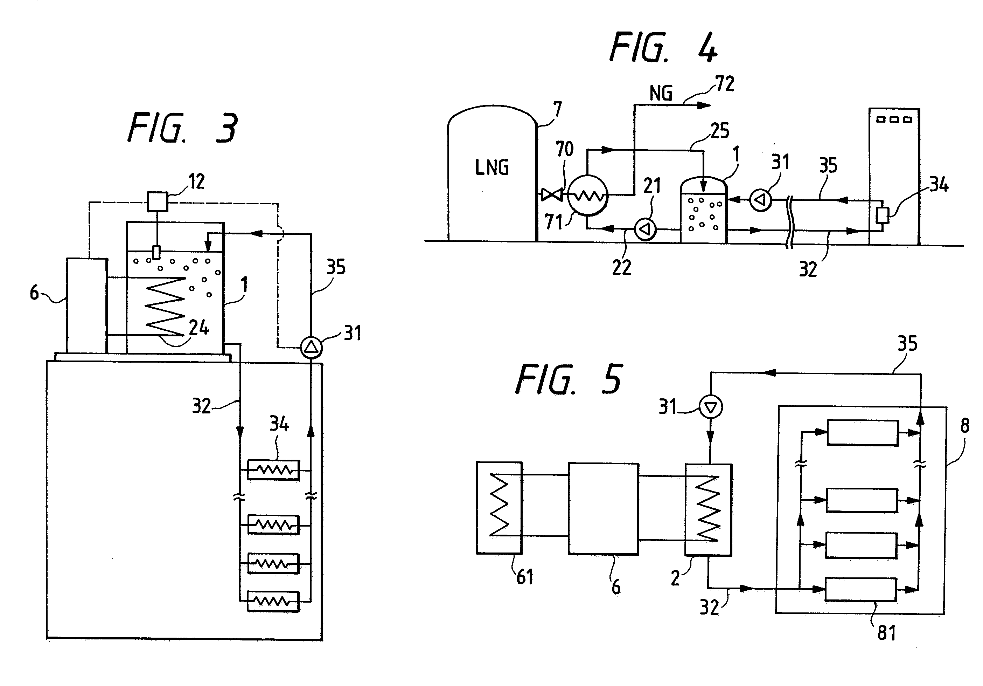

The embodiment shown in Fig. 3 is an example of cool heat storage apparatus having a compression heat pump 6 using off-peak electric power. The apparatus has a small heat storage capacity. The compression heat pump 6 and the storage tank 1 for the heat storage medium are installed on the roof of a building, and heat storage is carried out using off-peak electric power in the pump 6 to cool the W/O emulsion in the tank, solidifying the dispersed liquid droplets into particles and forming a slurry. For cooling in the building, the slurry is sent to coolers 34 on each floor through the slurry outlet pipe 32, and the W/O emulsion which has released "cool heat" and in which the particles are liqueified is returned to the storage tank 1 by the heat pump 31. Control of heat storage and release is carried out by starting and stopping the compression heat pump and the heat pump 31. In this preferred embodiment the tank contains a cooling pipe 24, so that the cooler and the storage tank are constructed in a unit. Thus the apparatus is of a small heat storage capacity type. It is also convenient to carry out the cooling operation at the same time as the heat storage operation, the compression heat pump 6 being started as required. A "hot heat" storage operation can be also carried out, in the same way as in the first embodiment described above.

Fig. 4 shows the fourth embodiment in which the present invention is applied in recovering the cool heat of liquefied natural gas (LNG) using the formation of fluid ice slurry. A vaporizer 71 is connected to an LNG tank 7 through a valve, and the LNG from the tank 7 absorbs heat in the vaporizer 71 to be vaporized and supplied to the consumer as natural gas (NG) in line 72. The vaporizer 71 forms a heat release means for a heat storage medium in accordance with the invention. The storage tank 1 is connected to the vaporizer 71 by the emulsion outlet pipe 22 with the pump 21 and the slurry return pipe 25. The storage tank 1 is further connected to a building or district cooling load 34, which is an endothermic device, through the slurry outlet pipe 32 and the emulsion return pipe 35 provided with the pump 31. The emulsion heating medium sent out to the vaporizer 71 by the pump 21 is cooled by the LNG, and the liquid droplets dispersed in the emulsion are solidified to form a fluid slurry which is retuend to the storage tank 1. In the storage tank 1, the emulsion and the slurry are stored in the same container, with a boundary between them, as in Figs. 1 to 3. The slurry stored in the storage tank 1 is sent to the local cooling load 34 to cool a building or other region through the slurry outlet pipe 32 and is returned to the storage tank 1 after absorbing heat and being emulsified.

Previously, when water has been used for recovering cool heat from LNG, the heat exchanger tubes of the vaporizer have become coated with ice and the heat exchange performance was reduced. At the same time, the cool heat transport means was cool water with a low heat transport density. The ice has no fluidity. In this embodiment of Fig. 4, since the heat storage medium is a mixed material according to the invention, the heat exchanger tubes of the vaporizer are not coated with ice. Heat can be transported with a high heat transport density using the phase change and a slurry which is fluid.

Fig. 5 shows the fifth embodiment in which the present invention is applied for locally cooling a computer. As the degree of integration of semiconductors increases, the power output per semiconductor chip is increased and local cooling becomes important. Parts are densely arranged inside the computer due to miniaturization, and space for a cooling medium passage is limited. Therefore, it is desirable to move a small amount of cooling medium and to obtain a high cooling effect. Moreover it often happens for structural reasons that an endothermic part, carrying the cooling medium, cannot be installed in the neighborhood of a cooled body (semiconductor ship).

With the present invention, as the heat transport density of the heat storage system is large, a high cooling effect can be obtained with a small refrigerant flow, and the endothermic part can be separated and miniaturized. This results because the fluidity of the above heat storage medium (in its slurry state) is good. This embodiment includes a cooler 2 which is a heat release means, the compression heat pump 6 for cooling the above cooler 2, a heat release part 61 for the heat pump 6, a semiconductor chip cooling device 81 which are endothermic means in a computer 8, the slurry outlet pipe 32 which connects the outlet of the cooler 2 and the inlet of the semiconductor chip cooling devices 81, the emulsion return pipe 35 which connects the outlet of the semiconductor chip cooling devices 81 and the inlet of the cooler 2, and the pump 31 in the emulsion return pipe 35. The heat storage system is thus sealed in a closed circuit comprising the cooler 2, the slurry outlet pipe 32, the semiconductor chip cooling device 81, the emulsion return pipe 35 and the pump 31. The slurry absorbs a large quantity of heat released from the semiconductor chips at the semiconductor chip cooling device 81 with high efficiency, and the solidified particles in the slurry are melted to form liquid droplets and are converted into the emulsion. This emulsion is returned to the cooler 2 by the pump 31, where the emulsion is changed into slurry (by the operation of the pump 6) and the above cycle is repeated. The heat released at the semiconductor chips is removed by a small amount of slurry with a high heat transport density and is transported in the form of the W/O emulsion and released outside the system by the heat release device 61 of the compression heat pump 6, outside the computer. This embodiment is illustrated for a computer, but can be also applied to other fields requiring local cooling, for example, in the biochemical field, and its use in local heating is also possible.

A particular advantage of this embodiment is that the cooling of the semiconductor chips is performed by the heat storage system at a constant temperature (i.e. the solidification/melting temperature of the droplets) regardless of variation in the heat flow rate. Highly stable temperatures can thus be maintained. This can be achieved when all three phases (oil, water, ice) are present both at the inlet and the outlet of the cooling devices of the computer or other apparatus.

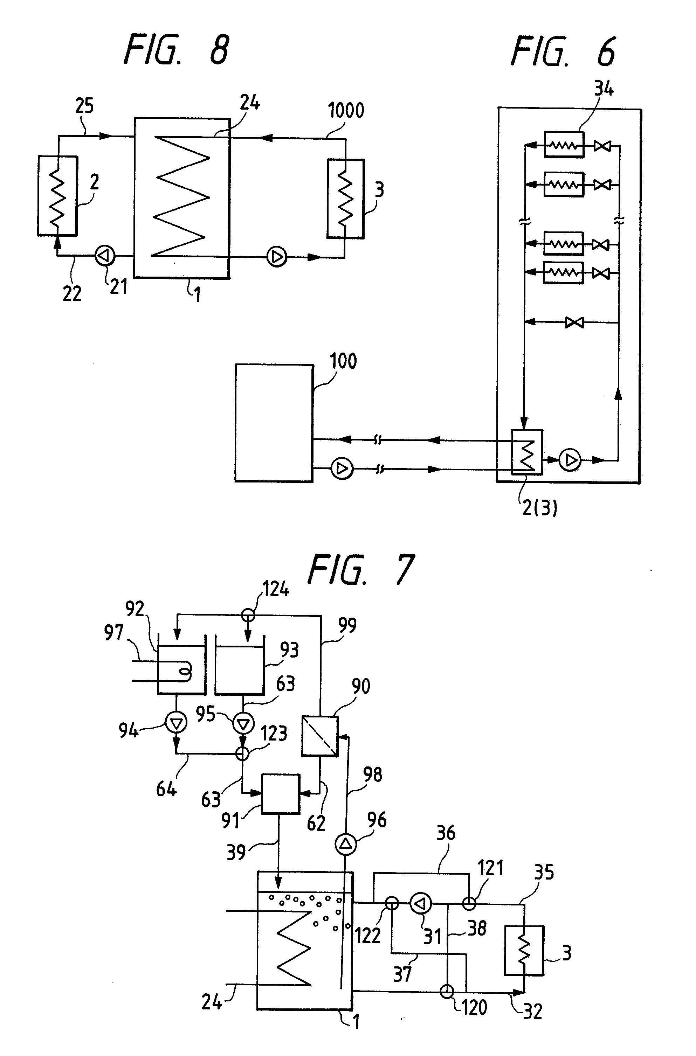

Fig. 6 shows the sixth embodiment in which the present invention is applied to heat transport in a building connected to a district cooling and heating plant.

In the embodiment of Fig. 3, a compression heat pump is used for cooling the heat storage system, but in Fig. 6, cool heat (or hot heat) supplied from an energy supply plant 100 is condensed (i.e. converted into a high density form) by the W/O emulsion (or the slurry) in the cooler 2 installed in each building and is then recovered and released at the radiators 34 at each floor. When water is used as a heat storage medium, the heat transport density is small, and in case of cool heat transport, when the temperature is 5°C to 7°C, it is necessary to pass a large quantity of the heat storage medium (cooled water or heated water) through a large-diameter pipe, and there are defects in the handling of load fluctuation, rapid cooling and so forth. In this embodiment of the invention, heat transport density is increased, and in the case of cool heat transport, since the heat storage medium can be an ice slurry with a lower temperature (0°C), the pipe diameter can be small and load fluctuation, rapid cooling and so forth can be easily handled. In this embodiment, because the cost of the heat storage system is higher than that of water or ice, this system is not used for heat transport between the energy supply plant 100 and each building. This avoids the use of a large quantity of the heat storage system. However the heat storage system can be used for this purpose if it is more appropriate, taking into account all economic factors.

Fig. 7 shows the seventh embodiment of the present invention which is capable of changing between cool heat utilization and hot heat utilization. In the embodiments described above, a pump is provided in principle in the pipe through which the W/O emulsion flows. Therefore to change between cool heat utilization and hot heat utilization the W phase medium must be exchanged and the installation position of the pump must be altered. This present embodiment achieves this and is intended for an apparatus in which a cooler is contained in a storage tank, but it can also be applied to another apparatus in which they are separated.

The difference between this embodiment and the embodiment shown in Fig. 3 is, first, that a cross valve 120 for changing the effective location of the heating pump 31 in the circuit is provided in the pipe 32 which connects the storage tank 1 and the heater (and cooler) 3 inlet. Secondly cross valves 121 and 122 are provided at the inlet and outlet sides respectively of the heating pump 31 in the pipe 35. A pipe 36 connects the cross valve 121 to the pipe 35 between the cross valve 122 and the storage tank 1. A pipe 38 connects the cross valve 120 to the pipe 35 between the cross valve 122 and the heating pump 31, and a pipe 37 connects the cross valve 122 to the pipe 32 between the cross valve 120 and the heater 3. This arrangement enables the pump 31 to be placed in the circuit either on the downstream side or the upstream side of the heater/cooler 3.

Moreover, there is provided a tank 92 for the W phase fluid for hot heat containing a heater 97 and a tank 93 for the W phase fluid for cool heat. A pipe 63 has the tank 93 at its upstream end and includes a pump 95 and a cross valve 123. A pipe 64 has the tank 92 at its upstream end and the cross valve 123 at its downstream end and includes a pump 94. An emulsion generator 91 is connected to the downstream end of the pipe 63. An emulsion separator 90 is connected to the storage tank 1 by a pipe 98 including a pump 96. A pipe 62 connects the O phase fluid side of the emulsion separator 90 to the emulsion generator 91. A pipe 99 connects the W phase fluid side of the emulsion separator 90 to tanks 92 and 93 through a corss valve 124.

In utilizing cool heat, the W phase fluid for cool heat is sent by the pump 95 through the cross valve 123 to the emulsion generator 91 where it is mixed with the O phase fluid separated at the emulsion separator 90 to form the W/O emulsion. The W/O emulsion formed is sent to the storage tank 1 and is cooled to form the slurry by the heat exchange means 24. This slurry is sent to the heater 3 through the cross valve 120 and is heated to form the W/O emulsion by releasing the cool heat. This W/O emulsion is circulated to the storage tank 1 by the pump 31 through cross valves 121 and 122, and circulation is repeated after cooling again by the heat exchange means 24.

In order to change over to hot heat utilization, the cross valves 120 to 122 are switched over and the circuit storage tank 1 - cross valve 120 - pipe 38 -pump 31 - cross valve 122 - pipe 37 - heater 3 - cross valve 121 - pipe 36 - tank 1 is formed. In addition, the cross valves 123 and 124 are switched over and the route tank 92 - pump 94 - cross valve 123 - tank 91 -and the route emulsion separator 90 - cross valve 124 -tank 93 are set up. Next, the W/O emulsion in the storage tank 1 is sent to the emulsion separator 90 by the pump 96 and the O phase fluid and the W phase fluid are separated. The separated O phase fluid is sent to the emulsion generator 91 and the W phase fluid (for cool heat utilization) is sent to the W phase fluid tank 93 for cool heat through the cross valve 124. The W phase fluid for hot heat is sent from the tank 92 to the emulsion generator 91 by the pump 94 through the cross valve 123, where it is mixed with the above O phase fluid to form the W/O emulsion for hot heat and is sent to the storage tank 1. As the W phase fluid for hot heat is solidified at normal temperature, it is brought to the liquid state by the heater 97 in the tank 92. In the storage tank 1, the heat exchange means 24 now functions as a heater to heat the W/O emulsion and prevents the W/O emulsion from becoming a slurry. For hot heat utilization, the W/O emulsion is sent to the heater 3 by the pump 31 through the circuit described above, and heating is carried out by releasing hot heat here so that the emulsion is cooled to form a slurry and is returned to the storage tank 1. This slurry is heated by the heat exchange means 24, and the W phase particles which have been solidified are dissolved to form the W/O emulsion, and the circulation is repeated.

The heating medium for cool heat in this embodiment compreses a W/O emulsion with water for the W phase (40 weight %), paracymene for the O phase (60%) and sorbitan monooleate (4% in the O phase) for the emulsifier. Minute liquid droplets (W phase) were solidified at 0°C to form an ice slurry and the heat is stored in the storage tank 1 and is used for cooling by transporting the slurry to the heater 3.

The ice slurry used for cooling is thawed in the heater 3 to form the W/O emulsion at 10°C and is returned to the storage tank 1. The heat transport density was 38.4 kcal/kg, which is more than six times as much as in the case of cool water transport (6 kcal.kg at a cycle of 7°C to 13°C).

In a conventional method of producing an ice slurry, the ice particles are in the form of flakes or small plates. The upper limit of the concentration of the ice particles is almost 20% by weight, which is about half the preferred maximum concentration used in the present invention.

The liquid phase of the slurry, which does not change its phase, may have no significant contribution to heat storage and heat transport, and part of the heat energy for phase changing of the droplets is inevitably consumed by the liquid phase. If the heat sotrage system is of the O/W type emulsion, a larger heat energy is consumed by the liquid phase because the liquid phase has a specific heat of 1 kcal/kg.°C (in the case of water). On the other hand, when using a W/O emulsion, the liquid phase is typically oil having a small specific heat of about 0.5 kcal/kg.°C; the heat loss of the W/O emulsion system is smaller than that of the O/W type emulsion.

For hot heat, sodium thiosulphate ($Na_2S_2O_3$-$5H_2O$) for the W phase (40%) and a diphenyl for the O phase (60%), and the emulsifier sorbitan monooleate was added to this for emulsification at 60°C. This heat storage system was sent to the heater 3 in an emulsion state and was used for heating. At the heater 3 it was cooled and the W phase was solidified in the neighbourhood of 48°C and circulated to the tank 1 in the form of a slurry at 40°C. The hot heat transport density was 20 kcal/kg which was more than twice that obtained with hot water transport (8 kcal/kg at 48°C to 40°C).

The heat storage systemn (emulsion/slurry) is used as a heat storage and heat transport medium in the embodiments of Figs. 1 to 7, but it is better for some applications to use it only for heat storage. An example of this is shown as the eighth embodiment in Fig. 8. In Fig. 8, the cooler 2 is connected to the storage tank 1 by the slurry return pipe 25 and the emulsion outlet pipe 22 containing the pump 21 and the emulsion/slurry heat storage system is confined in this circuit. In addition, the heat exchange means 24 is located in the storing tank 1 and forms a closed circuit together with the heater 3, this circuit being filled with brine 1000. The W/O emulsion is cooled in the cooler 2 to form the slurry and heat is stored in the storage tank 1. The cool heat stored in the storage tank is transmitted to the brine 1000 through the heat exchange means 24 and is transported by the brine to the heater 3 for utilization. The high heat storage density of the W/O emulsion and stable heat exchange performance caused by the ice coating on the heat exchanger tube are both utilized in this preferred embodiment. This embodiment is suitable to be combined with other types of cooling and heating applications using brine and so forth for heat transport.

In the methods of the present invention in which a phase change is used from the solid phase to the liquid phase in the heat storage system of the W/O type, the spherical oleophobic liquid droplets are dispersed in the continuous phase having a small specific heat. The solidified particles are also of spherical shape, and are separated from each other by the liquid continuous phase. Thus the particles do not hinder fluidity by adhering to each other. It is possible to obtain a highly fluid slurry with a high concentration of solidified particles so that a system of high density of heat storage and heat transport is realised. Further, heat loss during phase transition is small, because the liquid phase dispersing the liquid droplets-solidified particles is a non-solidifying liquid.

## Claims

1. A method of transfer of heat providing a heat storage system consisting of a mixture of an oleophilic material and a non-oleophilic material not soluble in said oleophilic material which system is capable of conversion to and fro between a first state which is a water-in-oil type emulsion and a second state which is a slurry type state in which one of said materials is in the frozen state in the form of particles, wherein heat transfer is effected by at least one of

(i) removing heat from said heat storage system so as to convert it from said first state to said second state,

(ii) putting heat into said heat storage system so as to convert it from said second second state to said first state,

characterized in that said non-oleophilic material has a higher melting point than said oleophilic material and in said emulsion said oleophilic material is a liquid forming the continuous phase and said non-oleophilic material in the liquid state is the internal phase and in said slurry state the non-oleophilic material is in the form of said particles.

2. A method according to claim 1 wherein said non-oleophilic material is less than 50 by weight of said mixture.

3. A method according to claim 1 or claim 2 wherein said non-oleophilic material has a higher specific heat in the liquid phase than said oleophilic liquid.

4. A method according to any one of claims 1 to 3 wherein the ratio of the density of said non-oleophilic material in the solid phase at its melting point to the density of said oleophilic material at the same temperature is in the range 0.95 to 1.2.

5. A method according to any one of claims 1 to 4 wherein said non-oleophilic material is an aqueous material having a melting point in the region of 0°C.

6. A method according to any one of claims 1 to 4 said non-oleophilic material is a hydrated inorganic compound of melting point in the range 20 to 120°C.

7. A method according to any one of claims 1 to 6 wherein said heat storage system is transferred through a piping system which is contacted at least mainly by said oleophilic liquid whereby corrosion of said piping system due to contact with said non-oleophilic material is minimized.

8. A method of transfer of heat using a heat storage system consisting of a mixture of a liquid first material and a second material not soluble in said first material and having a higher melting point than said first material, said system being capable of conversion to and fro between two states of which a first state is an emulsion in which said first material forms the continuous phase and said second material in the liquid state forms the internal phase and a second state is a slurry type state in which said second material is in the frozen state in the form of particles in said first material, characterized by the steps of

(i) removing heat from said heat storage system by converting it from said first state to said second state at a first location,

(ii) at a second location remote from said first location putting heat into said storage system by converting it from said second state to said first state before, during or after step (b), and

(iii) moving at least part of said heat storage system between said first and second locations.

9. A method according to claim 8 including the step of storing said heat storage system in bulk in a storage vessel between said steps (i) and (ii).

10. A method according to claim 8 or claim 9 wherein at least one of said steps (i) and (ii) is performed at a constant temperature which is the melting point of said second material, so as to maintain a constant temperature at at least one of said locations.

11. A method according to any one of claims 8 to 10 wherein said first and second materials are selected so that substantially no separation of the materials takes place in said second state.

12. A method according to any one of claims 1 to 11 wherein control is effected by observation of the volume of the heat storage system, said volume changing by a substantial amount on conversion between said first and second states.

13. Apparatus for carrying out heat transfer, comprising
(a) a conduit system
(b) in said conduit system, a heat storage system (4,5) consisting of a mixture of a liquid first material (41) and a second material (42,52) not soluble in said first material and having a higher melting point than said first material, said system being capable of conversion to and fro between two states of which a first state is an emulsion in which said first material forms the continuous phase and said second material in the liquid state (42) forms the internal phase and a second state is a slurry type state in which said second material is in the frozen state (52) in the form of particles in said first material, characterized by

(c) at a first location of said conduit system, output means (2,24,71) for removing heat from said heat storage system by converting it from said first state to said second state,

(d) at a second location of said conduit system remote from said first location, input means (3,34,81) for putting heat into said storage system by converting it from said second state to said first state,

(e) means (21,31) for moving at least part of said heat storage system to and fro between said input and output means.

14. Apparatus according to claim 13 further including

(f) storage means (1) for storing said heat storage system in bulk, connected to said conduit system.

15. Apparatus according to claim 14 wherein said storage means (1) comprises a vessel defining a volume for storage of said heat storage system, said volume having a first end and a second end, said conduit system including a first loop (22,25) connecting said first end of said volume to said second end thereof via said input means and a second loop (32,35) connecting said second end of said volume to said first end thereof via said output means, and said heat storage system (4,5) having a boundary between said first and second states thereof in said volume.

16. Apparatus according to claim 15 wherein said means (21) for moving said heat storage system includes first means (31) to cause circulation in said first loop and second means to cause circulation in said second loop.

17. Apparatus according to any one of claims 14 to 16 wherein said storage means defines an elongate path of zig-zag or convoluted shape for travel of said heat storage system, said heat storage system having a boundary between said first and second states thereof in said path.

18. Apparatus according to any one of claims 13 to 17 wherein said output means is a heat exchanger (71) arranged for said heat storage system to heat a liquefied gas to convert it to the gas state.

19. A cooling system for a building having
(a) at least one refrigeration means (6,24,71) to cool a coolant
(b) at least one cooling unit (34) for cooling at least a part of said building by means of said coolant which is heated thereby,
(c) storage means (1) for said coolant, and characterized by
(d) a conduit system (22,25,32,35) connecting said refrigeration means, cooling unit and storage means, wherein said coolant is a heat storage system consisting of a mixture of a liquid first material (41) and a second material (42,52) not soluble in said first material and having a higher melting point than said first material, said system being capable of conversion to and fro between two states of which a first state is an emulsion in which said first material forms the continuous phase and said second material in the liquid state (42) forms the internal phase and a second state is a slurry type state in which said second material is in the frozen state (52) in the form of particles in said first material.

20. A cooling system for semiconductor modules, comprising

(a) refrigeration means (6) to cool a coolant

(b) means (31,32,35) for circulating the coolant from the refrigeration means to said semiconductor modules to cool them

characterized in that said coolant is a heat storage system consisting of a mixture of a liquid first material (41) and a second material (42,52) not soluble in said first material and having a higher melting point than said first material, said system being capable of conversion to and fro between two states of which a first state is an emulsion in which said first material forms the continuous phase and said second material in the liquid state (42) forms the internal phase and a second state is a slurry type state in which said second material (52) is in the frozen state in the form of particles in said first material.

FIG. 1

FIG. 2

FIG. 3

FIG. 4

FIG. 5

EP 0 353 992 A2

FIG. 8

FIG. 6

FIG. 7